# EUROPÄISCHE PATENTSCHRIFT

(11) **EP 0 790 195 B1**
(45) Veröffentlichungstag und Bekanntmachung des Hinweises auf die Patenterteilung: **17.05.2000**
(21) Anmeldenummer: 97102138.1
(22) Anmeldetag: 11.02.1997
(51) Int. Cl.: B65G 1/08

(54) **Lagersystem, insbesondere Durchlauflagersystem**
Storage system, in particular a system for consecutive storage
Système de stockage, notamment système de stockage en série

(30) Priorität: 14.02.1996 DE 19605364
(43) Veröffentlichungstag der Anmeldung: 20.08.1997
(73) Patentinhaber: FRAUNHOFER-GESELLSCHAFT ZUR FÖRDERUNG DER ANGEWANDTEN FORSCHUNG E.V., 80636 München (DE)
(72) Erfinder: Schroer, Winfried, Dipl.-Ing. (FH), 44581 Castrop-Rauxel (DE)

(56) Entgegenhaltungen:
- WO-A-87/02016
- BE-A- 753 336
- DE-A- 3 628 381
- DE-A- 4 318 341
- DE-C- 3 920 405
- FR-A- 2 639 622
- US-A- 3 456 811

## Beschreibung

Die Erfindung betrifft ein Lagersystem, insbesondere ein Durchlauflagersystem.

Durchlauflager, z.B. in Form von Durchlaufregalen bei denen das Lagergut auf nichtangetriebenen Röllchenleisten mit Gefälle steht, sind für kleine quaderförmige Packstücke oder Behälter eine kostengünstige Lösung die raumsparende Kanallagertechnik zu realisieren.

Für die automatische Beschickung eines Durchlauflagers für quaderförmige Packstücke wird am oberen Ende des geneigten Röllchenleistenkanals ein Beladegerät und am unteren Ende ein Entladegerät benötigt. Das erforderliche Versetzen der beiden Geräte zu den unterschiedlichen Kanälen des Regals kann z.B. dadurch gewährleistet werden, daß sie auf Regalbediengeräte montiert werden und mit diesen in den Regalgassen in horizontaler und vertikaler Richtung verfahren werden. Eine weitere Möglichkeit besteht darin, die Geräte an den Stirnseiten eines Umlaufregals anzuordnen, bei dem die Gondeln geneigt aufgehängt und mit Röllchenleisten ausgerüstet sind. Eine solche Anordnung ist aus der DE-PS 40 33 184 bekannt. Das Beladegerät ist so gestaltet, daß es die zur Beladung auf einer Förderstrecke aufgestaut anstehenden Packstücke auf einfache Weise vereinzelt und ohne Einsatz eines Zentrierpushers mittig in den Kanal einschiebt. Ein Zentrierpusher, der mit zwei seitlichen Backen nach Art einer Zange durch Verschieben quer zum Förderer das Packstück zentriert, ist deshalb problematisch, weil seine Kraft einerseits so groß sein muß, daß auch die schwersten Packstücke sicher geschoben werden und andererseits klein genug sein muß, daß kleine Packstücke nicht zerquetscht werden.

In der WO-A-87/02016 ist ein Lagersystem mit einem Lagerkanal mit mehreren nicht angetriebenen Förderröllchen mit Gefälle und Zwischenräumen beschrieben. Ein Pusher schiebt die Packstücke auf die Förderröllchenleisten. Ferner ist eine Entnahmeeinrichtung vorgesehen zum Entnehmen von Packstücken an einen Riemenförderer.

Bei Füllung von gattungsgemäßen Lagern, mit formstabilen Behältern gleicher Größe, ist die vollautomatische und betriebssichere Be- und Entladung der Kanäle stets gewährleistet. Werden dagegen Packstücke, z.B. aus Karton eingelagert, deren Wände nicht formstabil sind, sondern durch Stoß oder rauhe Behandlung Wülste und Beschädigungen aufweisen, ist in der Regel damit zu rechnen, daß einzelne Packstücke nicht durchrollen sondern im Kanal hängen bleiben, so daß Bedienpersonal manuell eingreifen muß. Ein weiteres Hindernis für eine Automatisierung ist dann gegeben, wenn im gleichen Kanal Packstücke mit unterschiedlichen und stark voneinander abweichenden Außenabmessungen eingelagert werden sollen, aber sichergestellt sein muß, daß jeweils nur eins der dicht aneinanderstehenden Packstücke aus dem Kanal entnommen wird.

Aufgabe der vorliegenden Erfindung ist es, ein Durchlauf-Lagersystem anzugeben das eine automatische Beförderung und/oder Lagerung von empfindlichen Packstücken unterschiedlicher Größe zuverlässig ermöglicht.

Diese Aufgabe ist durch ein Lagersystem mit den kennzeichnenden Merkmalen des Anspruchs 1 gelöst. Die Unteransprüche stellen vorteilhafte Weiterbildungen dar.

Die mittige Aufgabe des Förder-/Lagergutes auf die Röllchenleisten, bzw. in den Lagerkanal, vermeidet die Beschädigungen des Lagergutes an den seitlichen Begrenzungswänden des Kanals. Ferner, durch die genau positionierte, mittige Einzelaufgabe der Packstücke auf die Förderbahn liegen diese nie nebeneinander, was bei kleineren Packstücken leicht eintreten kann. Damit wird ein "Ausknicken" des Stapels vermieden und die Packstücke sicher hintereinander aufgestaut. Durch die Verbindung der Belade- und Zentriereinheit und die somit gegebene Überwachung des Aufgabevorganges ist gewährleistet, daß die Packstücke so aufgegeben werden, daß sie nicht beschädigt werden, sich während des Transportvorganges nicht verkanten und, daß die Entnahme der Packstücke mittels zwischen die Röllchenleisten einfahrbarer Zinken, wobei der Verfahrweg der Zinken durch eine diesen zugeordnete Sensoreinrichtung überwacht und gesteuert wird, einfach und zuverlässig erfolgen kann.

Weitere Ausführungsformen und Einzelheiten des Lagersystems sowie der Belade- und Entnahmevorgang wird unter Zuhilfenahme der Ausführungsbeispiele, der Figuren und der Angabe der Wirkungsweise beschrieben. Es zeigen:

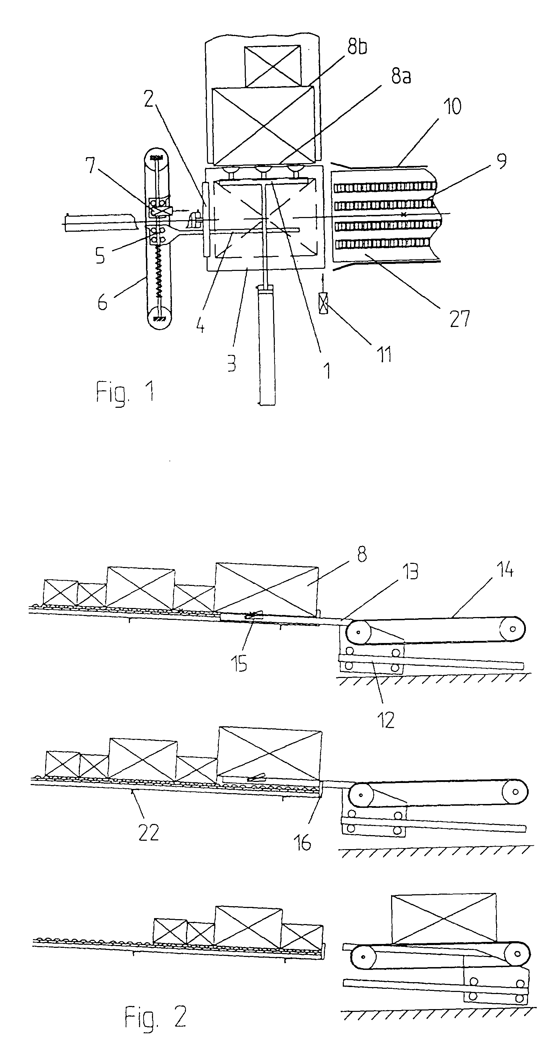

- Fig. 1: den Anfang des Lagerkanals und das Beladegerät in Draufsicht;
- Fig. 2: das Ende des Lagerkanals und die verschiedenen Phasen des Entladevorgangs in Seitenansicht;

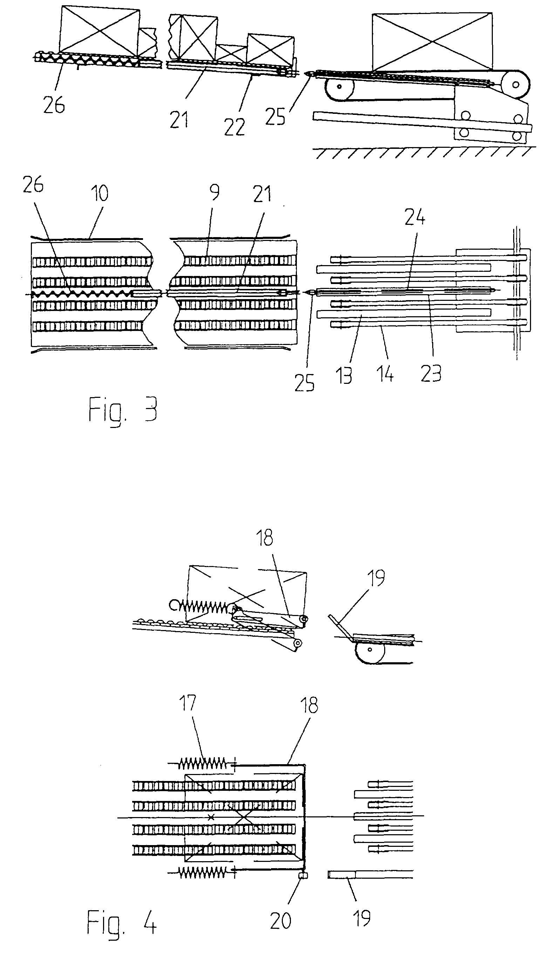

- Fig. 3: Einrichtung zum Lösen hängengebliebener Packstücke;
- Fig. 4: eine Ausführungsform eines stoßdämpfenden Anschlags und seine Betätigung durch eine Nockenbahn in Seitenansicht und Draufsicht;

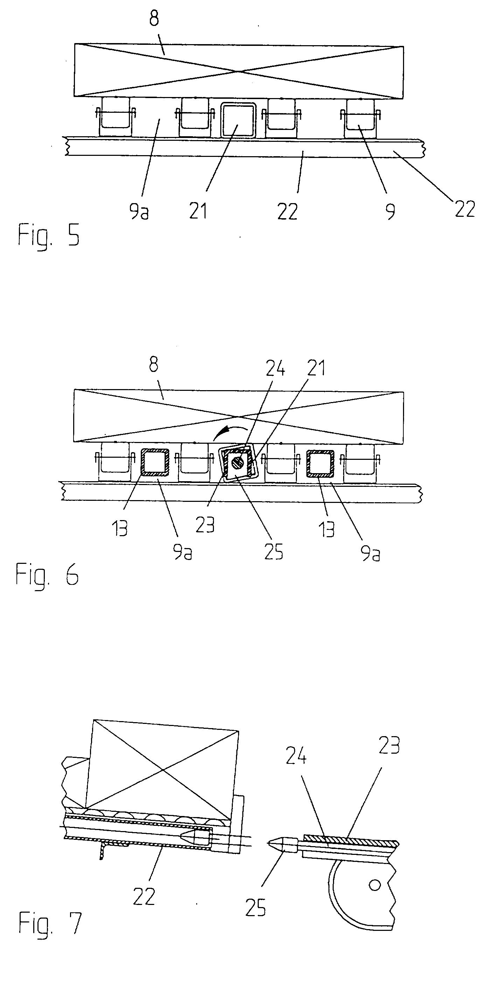

- Fig. 5: eine Ansicht der Lage des Vierkantrohrs zwischen den Röllchenleisten;
- Fig. 6: einen Schnitt durch die Zinken des Entladegeräts und das gedrehte Vierkantrohr;
- Fig. 7: den Vierkant vor dem Einschieben des Vierkantrohr.

Der Belade- und gleichzeitig Zentriervorgang wird mittels des dargestellten Lagersystems folgendermaßen durchgeführt:
Ein Sauggreifer 1 zieht die zur Einlagerung anstehenden Packstücke 8 auf eine Platte 3, die mittig vor dem Lagerkanal 27 positioniert ist. Während des Herüberziehens nimmt die Vorderkante 8a dieses Packstückes 8 einen Tastarm 4 mit, der an einer Linearführung 5 verschiebbar aufgehängt ist und der seine Ruhestellung federunterstützt ungefähr in der Mitte der Platte 3 einnimmt. Er ist über einen Seil- oder Riementrieb 6 mit einem zweiten Linearschlitten, der einen Lichttaster 7 trägt, verbunden dessen Austrittsöffnung in Ruhestellung um den gleichen Betrag neben der Lagerkanalmitte steht wie die packstückseitige Kante des Tastarms 4. Der Lichttaster 7 fährt bezüglich des Tastarms 4 mit gleichgroßer aber entgegengesetzter Geschwindigkeit. Sobald er anhand einer abfallenden Signalflanke die Hinterkante 8b des Packstücks 8 erkennt, wird das Vakuum für den Sauggreifer 1 abgeschaltet, so daß das Packstück 8 augenblicklich stehenbleibt. Der Sauggreifer 1 fährt weiter bis in seine Endstellung, worauf ein Pusher 2 in Aktion tritt um das Packstück 8 mittig in den Regalkanal auf die Röllchenleisten 9 zu schieben. Die Einsatzmöglichkeiten eines solchen Zentriermechanismus sind nicht auf die Beschickung von Durchlauflagern beschränkt.

### Weist das Lagersystem Röllchenleisten Gondeln auf, so liegt der Schwerpunkt der Ladung unterhalb der Gondel.

Die Entnahmeeinrichtung ist so gestaltet, daß zur Packstückentnahme mehrere, an einer Linearführung 12 aufgehängte Zinken 13 in die Zwischenräume 9a zwischen den Röllchenleisten 9 im Regal bis kurz vor das Ende des zu entnehmenden Packstückes 8 einfahren, dieses mit einer kurzen Hubbewegung anheben und während der Rückziehbewegung kontinuierlich an einen Riemenförderer 14 übergeben. Die Information, wie tief die Zinke 13 einfahren muß, wird an dem Gerät durch Längenmessung mittels einer Lichtschranke 11 und einen Weggeber erfaßt und im Lagerverwaltungsrechner abgelegt. Zusätzlich ist an einer der Zinken 13 ein Taster 15 angebracht, der während des Einschiebens die Vorderkante 8a des Packstückes erfaßt. Dieser Taster 15 wird nur dann benötigt, wenn die Lagerkanäle 9a mit stoßdämpfenden Anschlägen am Kanalende ausgerüstet sind, weil die Gefahr besteht, daß die Verpackung auflaufender Packstücke 8 von einem starren Anschlag 16 beschädigt würde oder daß kleine Packstücke 8 von schwereren zerquetscht werden. In diesem Fall ist je nach Stoßdämpferauslenkung eine unterschiedliche Lage des Packstückes 8 relativ zum Entladegerät gegeben, was durch den Taster 15 erfaßt und von der Steuerung ausgeglichen wird. Ein solcher Stopdämpferanschlag kann als ein an Federn 17 aufgehängter Bügel 18 ausgebildet sein, der von einer neben den Zinken 13 angebrachten Nockenbahn 19 über eine Rolle 20 zwangsgesteuert in dem Moment heruntergedrückt wird, wenn die Zinke 13 fast das Packstück 8 erreicht hat, so daß es nicht aus dem Lager fällt, falls es durch den Staudruck sofort aus dem Lagerkanal 27 gedrückt wird.

Die Einrichtung zum Lösen hängengebliebener Packstücke 8 hat folgende Wirkungsweise:
In der Mitte des Lagerkanals 27 liegt zwischen den Röllchenleisten 9 ein fast kanallanges Vierkantrohr 21 geeigneter Größe auf den Querriegeln 22, die die Röllchenleiste 9 tragen. In der mittleren Zinke 23 des Entladegeräts ist ein Drehstab 24 angeordnet, der an seiner Spitze einen angespitzten Vierkant 25 trägt, der beim Einschieben der Zinke 23 in den Lagerkanal in das Vierkantrohr 21 eingeschoben wird. Bei weiterem Einschieben wird das Vierkantrohr 21 von der Zinke 23 gegen die Kraft einer Feder 26 nach oben geschoben. Sobald die Zinke 23 ihre Endstellung erreicht hat, wird mit Hilfe des Drehstabs 24 das Vierkantrohr 21 so weit gedreht, daß seine Kante reibschlüssig von unten gegen die aufgestauten Packstücke 8 drückt. Beim Zurückziehen der Zinke 23 werden die Packstücke 8 dann kraftschlüssig und nicht allein schwerkraftangetrieben genau um das Stück Kanallänge 27 mitgenommen, das durch das entnommene Packstück 8 freigeworden ist.

Die für eine Automatisierung benötigte Steigerung der Betriebssicherheit wird redisiert, wie oben beschrieben.

## Patentansprüche

1. Lagersystem zum Transport und Lagerung von insbesondere Quaderförmigen Packstücken (8) insbesondere Durchlauflagersystem mit einem Lagerkanal (27), der mehrere nicht angetriebene Förderröllchenleisten (9) mit Gefälle und Zwischenräumen (9a) zwischen den Röllchenleisten aufweist mit einer Belade- und Zentriereinrichtung am Anfang des Lagerkanals (27) die einen Pusher (2) zum Schieben von Packstücken (8) auf die Förderröllchenleisten (9) aufweist und mit einer Entnahmeeinrichtung zum Entnehmen der Packstücke (8) vom Lagerkanal (27) an einen Riemenförderer, dadurch gekennzeichnet, daß an der Belade- und Zentriereinrichtung ein Sauggreifer (1) zum Einziehen der Packstücke (8) auf eine mittig vor dem Lagerkanal (27) positionierte Platte (3)vorgesehen ist, wobei eine Tasteinrichtung für die auf die Platte (3) einziehbaren Packstücke (8) den Zeitpunkt und die Position der Aufgabe der Packstücke (8) von der Platte (3) auf die Röllchenleisten (9) in den Lagerkanal (27) bestimmt und daß die Entnahmeeinrichtung mehrere an einer Linearführung (12) angeordnete, in die Zwischenräume (9a) zwischen den Röllchenleisten (9) einfahrbare Zinken (13, 23) zum Unterfahren und Anheben der zu entnehmenden Packstücke (8) aufweist, und daß zur Steuerung des Entnahmevorgangs eine den Zinken zugeordnete Sensoreinrichtung zur Steuerung und Überwachung derselben vorgesehen ist.

2. Lagersystem nach Anspruch 1 **dadurch gekennzeichnet**, daß eine Einrichtung zum Lösen hängengeblienener Packstücke (8) vorgesehen ist.

3. Lagersystem nach Anspruch 1 oder 2 **dadurch gekennzeichnet**, daß die Tasteinrichtung einen an einer Linearführung aufgehängten Tastarm (4) für die Vorderkante (8a) des Packstückes (8) und einen Lichttaster (11) für das Erkennen der Hinterkante (8b) des Packstückes (8) aufweist.

4. Lagersystem nach einem der Ansprüche 1 bis 3 **dadurch gekennzeichnet**, daß die Sensoreinrichtung für die Wegbegrenzung der Zinken (13) eine Lichtschranke (11) und einen Weggeber aufweist.

5. Lagersystem nach Anspruch 4 **dadurch gekennzeichnet**, daß die Entladeeinrichtung einen Taster (15) zum Erfassen der Vorderkante (8a) des Packstückes (8) aufweist.

6. Lagersystem nach einem der Ansprüche 4 oder 5 **dadurch gekennzeichnet**, daß am Ende des Lagerkanals (27) ein Anschlag (16) zur Vermeidung des Herausfallens der beförderten Packstücke (8) vorgesehen ist.

7. Lagersystem nach Anspruch 6 **dadurch gekennzeichnet**, daß der Anschlag ein gesteuerter Stoßdämpferanschlag (17, 18) ist.

8. Lagersystem nach Anspruch 2 **dadurch gekennzeichnet**, daß die Einrichtung aus einem zwischen den einzelnen Röllchenleisten (9) angeordneten und in deren Ebene drehbaren Vierkantrohr (21) besteht.

9. Lagersystem nach Anspruch 8 **dadurch gekennzeichnet**, daß .das Vierkantrohr (21) durch einen in seine Mitte einführbaren, an einem Drehstab (24) angeordneten Vierkant (25), der an einer Zinke (23) der Entnahmeeinrichtung angeordnet ist, gedreht wird.

10. Lagersystem nach einem der vorangegangenen Ansprüche **dadurch gekennzeichnet**, daß bei einem, mit Röllchenleisten-Gondeln ausgestatteten Lagersystem, der Schwerpunkt der Ladung unterhalb des Drehpunktes der Gondel liegt.

## Claims

1. Storage system for transporting and storing in particular cuboid packages (8), in particular a system for consecutive storage, having a storage channel (27) which has a plurality of non-actuated transport roller strips (9) at a gradient and spaces (9a) between the roller strips, having a loading and centring device at the beginning of the storage channel (27), which device has a pusher (2) for pushing packages (8) onto the transport roller strips (9), and having a removal device for removing the packages (8) from the storage channel (27) onto a conveyor belt, **characterised in that** a vacuum gripper (1) is provided on the loading and centring device for drawing the packages (8) onto a plate (3) positioned centrally in front of the storage channel (27), a sensing device for the packages (8) which can be drawn onto the plate (3) determining the point in time and the position of the delivery of packages (8) from the plate (3) onto the roller strips (9) in the storage channel (27) and **in that** the removal device has a plurality of prongs (13, 23), which are disposed on a linear guide means (12) and can be moved into the spaces (9a) between the roller strips (9), for lowering and lifting the packages (8) to be removed and **in that** to control the removal process a sensor device, which is associated with the prongs, is provided for controlling and monitoring the same.

2. Storage system according to claim 1, **characterised in that** a device is provided for removing packages (8) which have become stuck.

3. Storage system according to claim 1 or 2, **characterised in that** the sensing device has a sensing arm (4), which is suspended on a linear guide means, for the front edge (8a) of the package (8) and a light sensor (11) for detecting the rear edge (8b) of the package (8).

4. Storage system according to one of the claims 1 to 3, **characterised in that** the sensor device for delimiting the path of the prongs (13) has a light barrier (11) and a position transducer.

5. Storage system according to claim 4, **characterised in that** the unloading device has a sensor (15) for detecting the front edge (8a) of the package (8).

6. Storage system according to one of the claims 4 or 5, **characterised in that** a limit stop (16) is provided on the end of the storage channel (27) for preventing the conveyed packages (8) from falling out.

7. Storage system according to claim 6, **characterised in that** the limit stop is a controlled shock absorber limit stop (17, 18).

8. Storage system according to claim 2, **characterised in that** the device comprises a rectangular tube (21) which is disposed between the individual roller strips (9) and is rotatable in the plane of said strips.

9. Storage system according to claim 8, **characterised in that** the rectangular tube (21) is rotated by a rectangle (25) which can be introduced into the centre of said tube and is disposed on a rotating bar (24), said rectangle being disposed on a prong (23) of the removal device.

10. Storage system according to one of the preceding claims, **characterised in that**, in the case of a storage system which is provided with roller strip-gondolas, the centre of gravity of the load is situated beneath the fulcrum of the gondola.

## Revendications

1. Système de stockage, pour transporter et stocker en particulier des paquets (8) ayant la forme de parallélépipèdes rectangles, notamment système à stockage circulant, comportant :
- un canal de stockage (27) comprenant plusieurs barres à rouleaux (9) en pente, équipées de petits rouleaux transporteurs non entraînés, et des espaces intermédiaires (9a) entre les barres à rouleaux,
- au début du canal, un dispositif de chargement et de centrage équipé d'un poussoir (2) pour faire passer des paquets sur les barres à rouleaux (9),
- un dispositif de prélèvement pour faire passer les paquets (8) du canal (27) sur un transporteur à bande,
caractérisé en ce que
- près du dispositif de chargement et de centrage, il est prévu un preneur à aspiration (1) pour tirer les paquets (8) et les amener sur une plaque (3) prévue au milieu, devant le canal de stockage,
- un dispositif d'exploration des paquets (8) à amener sur la plaque (8) détermine à quel moment et dans quelle position les paquets (8) passent de la plaque (3) sur les barres à rouleaux (9) du canal de stockage (27),
- le dispositif de prélèvement présente plusieurs cames (13, 23) montées sur un guidage linéaire (12) et qui peuvent être introduites dans les espaces intermédiaires (9a) séparant les barres à rouleaux (9), pour passer sous les paquets et soulever ceux à prélever,
- pour commander le dispositif de prélèvement, il est prévu un dispositif de détection associé aux cames, et en assurant la commande et la surveillance.

2. Système de stockage selon la revendication 1,
caractérisé en ce qu'
il comporte un dispositif pour libérer les paquets (8) restés accrochés.

3. Système de stockage selon la revendication 1 ou 2,
caractérisé en ce que
le dispositif d'exploration comprend un bras (4), suspendu à un guidage linéaire et qui explore le bord avant (8a) du paquet (8) ainsi qu'un détecteur lumineux (11) pour détecter le bord arrière (8b) du paquet (8).

4. Système de stockage selon une des revendications 1 à 3,
caractérisé en ce que
le dispositif de détection servant à limiter la course des cames (13) comprend une barrière photoélectrique et un indicateur de course.

5. Système de stockage selon la revendication 4,
caractérisé en ce que
le dispositif de prélèvement comprend un palpeur (15) pour saisir la position du bord avant (8a) du paquet (8).

6. Système de stockage selon la revendication 4 ou 5,
caractérisé en ce qu'
il comporte, à l'extrémité du canal de stockage (27) une butée (16) pour éviter la chute des paquets transportés (8).

7. Système de stockage selon la revendication 6,
caractérisé en ce que
la butée est une butée (17, 18) commandée et dotée d'un amortisseur.

8. Système de blocage selon la revendication 2,
caractérisé en ce que
le dispositif de libération est composé d'un tube à section carrée (21) monté entre les diverses barres à rouleaux (9) et pouvant tourner dans le plan de celles-ci.

9. Système de stockage selon la revendication 8,
caractérisé en ce que
le tube à section carrée (21) est mis en rotation par une barre à quatre pans (25) montée sur une tige de rotation (24) et introduite dans le tube, cette barre étant montée sur une came (23) du dispositif de prélèvement.

10. Système de stockage selon une des revendications précédentes,
caractérisé en ce que
dans un système composé de balancelles équipées de barres à rouleaux, le centre de gravité de la charge est en dessous du centre de rotation de la balancelle.
